Europäisches Patentamt

European Patent Office

Office européen des brevets

(19)

(11) Publication number: **0 091 535**
**A2**

(12) # EUROPEAN PATENT APPLICATION

(21) Application number: **82850250.0**

(22) Date of filing: **03.12.82**

(51) Int. Cl.³: **G 01 J 3/28**

(30) Priority: **28.12.81 SE 8107809**

(43) Date of publication of application:
**19.10.83 Bulletin 83/42**

(84) Designated Contracting States:
**AT BE CH DE FR GB IT LI LU NL**

(71) Applicant: **LKB Biochrom Ltd.**
**Cambridge Science Park Milton Road**
**Cambridge CB4 4BH(GB)**

(72) Inventor: **Dickerson, Peter Michael**
**19 Batt Lane**
**Cambridge(GB)**

(72) Inventor: **Moult, Stephen Malcolm**
**15 Dain Tree Needingworth**
**Huntingdon Cambs(GB)**

(72) Inventor: **Waterworth, Peter**
**Holme Fen Drove**
**Colne Huntingdon Cambs(GB)**

(74) Representative: **Sandström, Sven**
**LKB-Produkter AB Box 305**
**S-161 26 Bromma(SE)**

(54) Spectrophotometer with wavelength calibration.

(57) Photometer having a variable wavelength comprising at least one light source, a monochromator having an adjustable wavelength, a sample position and a detector which detects the substantially monochromatic radiation obtained from the light source via the monochromator and the sample position. Furthermore, the photometer comprises a rotatable disc located in the light path and provided with angle position indication means by means of which it is possible to determine from the instant values of the detector signal the segment of the disc that has affected the radiation giving rise to the instant values in question.

FIG 2

EP 0 091 535 A2

Croydon Printing Company Ltd.

Photometer.

TITLE MODIFIED
see front page

The present invention refers to a variable wavelength photometer comprising at least one source of radiation, a monochromator having an adjustable wavelength, a sample position, a detector detecting the substantially monochromatic radiation obtained from the source of radiation via the monochromator and the sample position and a rotatable disc located in the path of radiation and provided with angle position indication means generating an indication signal at a certain angular position of the disc so as to make it possible to determine the sector of the disc that has affected the radiation generating a specific detecting signal, the disc in at least one sector comprising a filter with an accurately determined wavelength.

Photometers having a variable wavelength, so-called spectrophotometers, are in principle made in such a manner that light from a light source falls onto an entrance slit of a monochromator, in which the incident light by means of a diffraction element, usually a grating, is separated in space according to its wavelength. Only radiation of a certain desired wavelength is then emerging through the exit slit of the monochromator. This wavelength is obtained by turning the grating by means of one of a number of known rotation mechanisms, for example lead screws or sine bars. The position of the grating is then very critical to ensure that the desired wavelength is obtained at the exit slit. Mechanical wear of the rotation mechanism will easily mean for example that the position of the wavelength is displaced. In all known spectrophotometers there is always some type of adjustment device by means of which the wavelength can be calibrated. This calibration is however time consuming and therefore carried out relatively seldom, usually at the instrument supplier or by his personnel.

2

The object of the present invention is therefore to provide a spectrophotometer in which calibration of the wavelength could be performed in a simple manner by the user, for example before starting each measurement. The photometer according to the invention also allows that one can easily compensate the signal obtained from the detector from other light sources than the light source in question and, furthermore, desired filters, for example for eliminating the influence from wavelengths constituting whole multiples of the desired one, could easily be applied. The characteristics of the invention will appear from the claims attached to the specification.

The invention will now be explained in detail, reference being made to the attached drawing in which:

Fig. 1 schematically shows a known spectrophotometer;

Fig. 2 schematically shows a spectrophotometer according to the invention;

Fig. 3 shows a filter wheel used in the spectrophotometer according to the invention; and

Fig. 4 shows in the form of a block diagram the electric signal paths in a spectrophotometer according to the invention.

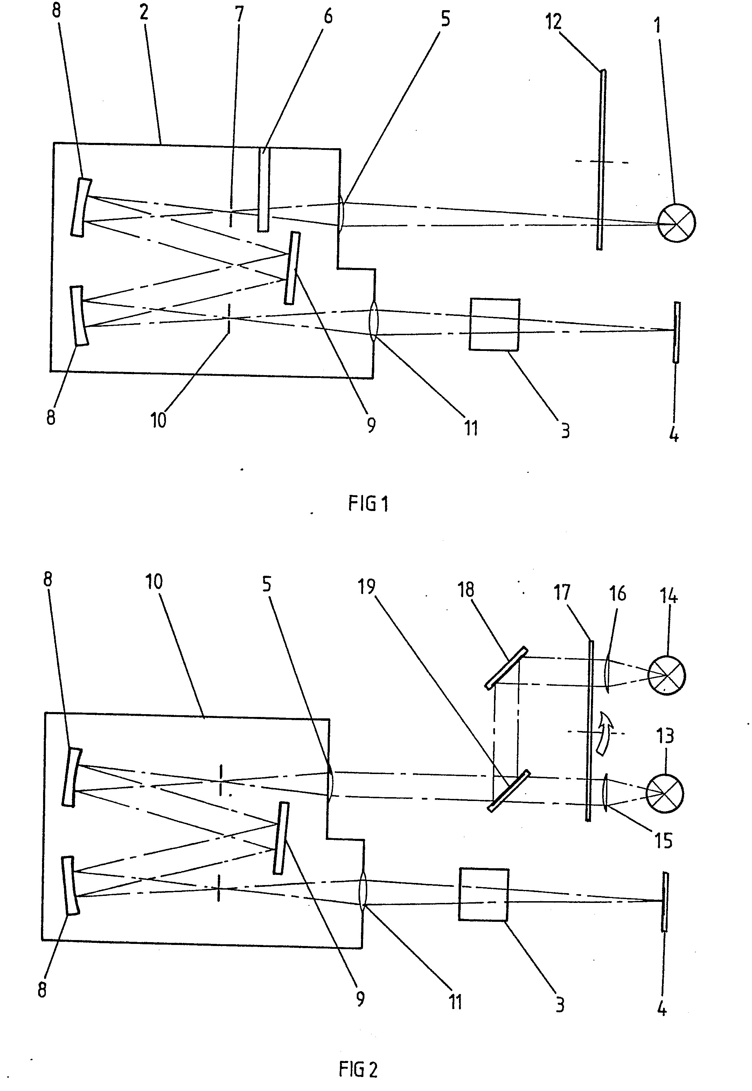

In Fig. 1 which schematically shows a known spectrophotometer reference 1 denotes a light source from which light falls onto a monochromator 2 of e.g. the so-called Czerny-Turner type. The incident light passes via a lens 5 and a filter 6 an entrance slit 7 and therefrom further towards one of two mirrors 8 towards a turning diffraction element 9, for example a grating. From the grating 9 the spectrally separated light passes the other mirror 8, an exit slit 10, a lens 11 through a sample 3 towards a detector 4. By turning the grating 9 around an axis perpendicular to the plane of the figure different wavelengths can be brought to pass through the exit slit 10 through the sample 3. Known spectrophotometers of the type shown in Fig. 1 are also often provided with a so-called chopper 12 consisting of a rotating disc provided with holes, which means that intermittent radiation is obtained at the detector 4, so as to obtain an alternating voltage exit signal. As pointed out above an essential disadvantage of this type of spectrophotometers is that calibration of the wavelength, which ought to take place relatively often, is relatively time consuming. Furthermore, an exchange of the filter 6, the function of which generally is to eliminate radiation from higher orders, is often necessary and the device does not allow a compensation for the part of the exit signal from the detector 4 which is derived from radiation not generated by the light source 1.

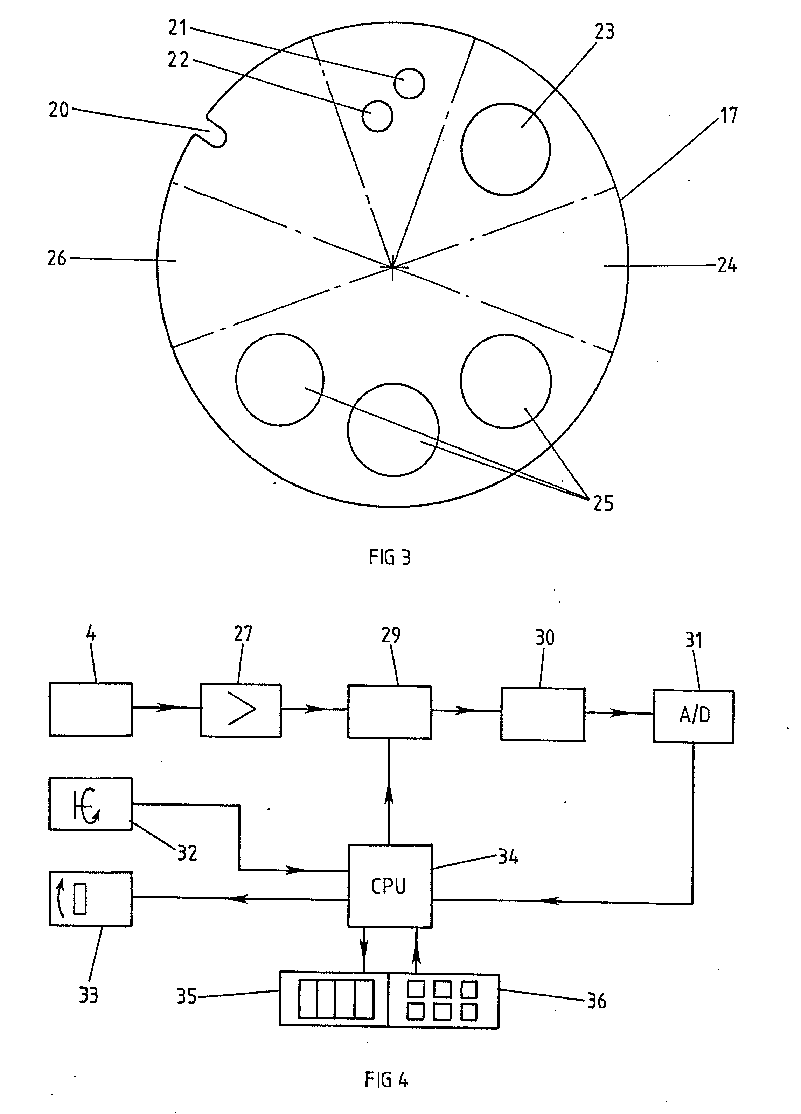

In Fig. 2 which schematically shows a photometer according to the invention, references 13 and 14, respectively, denote two light sources, i.e. a deuterium lamp and a mercury lamp for generating ultra-violet and visible infra-red light, respectively. The light from the lamps is via two filters 15 and 16, respectively, brought to fall onto a rotating filter wheel 17, the design of which will be explained in detail in connection with the description of Fig. 3. On the other side of the filter wheel a mirror 18 and a so-called beam splitter 19, i.e. a disc transmitting ultra-violet and reflecting visible light, are arranged. Light from both the light sources 13 and 14 will thus fall onto the monochromator 2 via the lens 5. The monochromator is of the same type as the monochromator described in connection with Fig. 1 and the light emerging from the monochromator reaches the detector 4 via the sample 3.

In Fig. 3 the rotating wheel 17 is shown. According to the embodiment the wheel is provided with a detectable slot 20 by means of which it is possible when knowing the rotation speed of the wheel to determine the position of the wheel momentarily. Furthermore, the wheel comprises two completely dark areas 24 and 26, respectively, and an area comprising two filters 21 and 22, respectively, each one only allowing radiation of a very narrow well defined band width to pass. The wheel further comprises two more filters 23 and 25, respectively, the function of which will be explained in detail below.

The electronics used for controlling the photometer according to the invention is schematically shown in Fig. 4. In this figure reference 34 denotes the central processing unit in a microprocessor which is continuously supplied with information regarding the position of the filter wheel 17 by means of detection of the slot 20 and by the fact that the rate of rotation of the wheel is known. The information thus obtained is used to control a gate 29 so that the signal amplified in an amplifier 27 from the detector 4 passes the gate each time a certain defined segment of the wheel is present in the radiation path of the lamp which is used. The signal that passes the gate 29 passes via a peak value detector 30 to an analogue digital converter 31, the outlet signal of which is registered in the central processing unit 34 and can be presented on a display 35. The central processing unit 34 can be affected externally through a key board 36 and outlet signals from the central processing unit can also be utilized for control of the grating 9 by means of a control unit 33.

In the spectrophotometer according to the invention it is obviously possible by opening the gate 29 a certain time after detection by the detection unit 32 of a passage of the slot 20 to obtain that the analogue digital converter 31 and the central processing unit 34 only register such signals from the detector that are obtained when the radiation from any of the light sources passes through a certain defined segment of the filter wheel 17. This could for example be used for calibration of the instrument by means of the two band pass filters 21 and 22 which are supposed to have their passbands at 400 nm and 900 nm, respectively. This could be arranged in such a way that the grating, as the instrument has been started, is moved to a position outside the measuring range, a so-called end stop position. From this position the microprocessor could then cause the grating to rotate over its measuring range and monitor the light transmitted by the calibration filters. During this movement two transmission peaks will occur, one at 400 nm and the other one at 900 nm (a minor peak of 800 nm (2 x 400) is obviously also obtained). If the grating is rotated by a step motor it is then possible to count the number of steps from 400 to 900 nm whereby a very accurate calibration is obtained.

The two opaque areas 24 and 26, respectively, of the filter disc 17 can be used for so-called dark current compensation, i.e. to compensate in the detector for the signal obtained when no light from the light sources reaches the detector.

At the actual measurement it is then obviously possible to measure by using either of the filters 23 and 25, whereby the filters could be chosen in a suitable way to eliminate higher order wavelengths and to reduce the influence of the light source which is not to be used.

0091535

We claim:

1. Variable wavelength photometer comprising at least
one source of radiation, a monochromator having an
adjustable wavelength, a sample position, a detector
detecting the substantially monochromatic radiation
obtained from the source of radiation via the monochromator and the sample position and a rotatable disc
located in the path of radiation and provided with angle
position indication means generating an indication signal
at a certain angular position of the disc so as to make
it possible to determine the sector of the disc that has
affected the radiation generating a specific detecting
signal, the disc in at least one sector comprising a filter
with an accurately determined wavelength, characterized
in that it comprises means for registering the position
of the monochromator when the detector signal derived
from radiation passing said filter reaches an extreme
value when varying the wavelength of the monochromator,
said registration value being used for calibrating the
photometer.

2. Photometer according to claim 1, characterized in
that it comprises two filters of predetermined wavelengths,
the corresponding registered values of the setting of
the monochromator being used for establishing a calibration
curve of the photometer.

1/2

0091535

FIG 1

FIG 2

2/2  0091535

FIG 3

FIG 4